# EUROPEAN PATENT SPECIFICATION

(11) **EP 1 387 157 B1**
(45) Date of publication and mention of the grant of the patent: **20.02.2008**
(21) Application number: 02255302.8
(22) Date of filing: 30.07.2002
(51) Int. Cl.: G01M 7/08, G01L 1/10

(54) **Method and apparatus for generator stator bar wedge pressure testing**
Verfahren und Vorrichtung zum Testen des auf einen Keil in einem Stator eines Generators einwirkenden Druck
Methode et dispositif pour l'examen de la pression agissant sur des cales de stator d'un générateur

(43) Date of publication of application: 04.02.2004
(73) Proprietor: GENERAL ELECTRIC COMPANY, Schenectady, NY 12345 (US)
(72) Inventor: Lusted, Roderick Mark, New York 12309 (US); Lancaster, William Edward, New York 12019 (US); Krass, Adam Zachary, New York 12019 (US)
(74) Representative: Pedder, James Cuthbert

(56) References cited:
- US-A- 4 901 572
- US-A- 5 353 631

## Description

The invention relates to testing procedures. More particularly, embodiments of the invention relate to the analysis of data collected in connection with testing pressure.

Electric generator stator bars are constrained from movement within slots in the stator by a wedge system. If the wedge system becomes loose, the stator bars can move relative to the slots. This relative motion contributes to bar insulation abrasion and potential bar failure via short to ground. Currently, although wedge systems are designed to engineering unit (pressure or force per unit length) constraints, wedge system tightness assessments cannot be related to those engineering design unit constraints for accurate assessment of required maintenance.

Two methods for semi-quantitative assessment of the tightness of a generator's wedging system currently exist. The first is a modification of the Brinnell / Rockwell hardness test and employs rebound velocity of a springloaded pin or arm. The second is a technique that applies a multi-tap forcing function to a wedge and measures the absolute magnitude of the vibrational response in three discrete frequency bands below 1000Hz.

US-A-5 353 631 discloses analysing internal pressure of a sealed container by tapping the container and deriving frequency spectra. In an embodiment, for each container a DSP determines the frequency of the greatest peak within an analysis spectrum and provides this information to the controller. The controller compares this frequency with limits and cutoffs. If the frequency is within a passing spectrum, the container passes.

US-A-4 901 572 discloses a system for measuring the deflection of a wedge in an electric machine. The system is able to measure the deflection and/or vibratory state of the wedge. In an embodiment, frequency-transformed vibration acceleration data are generated and an area of frequency response graph formed by waveform of the reference frequency spectrum is calculated. The area of the actually measured data (raw data) is compared with that of reference data. When the raw area data is larger than the reference area data, the wedge under test is judged to be slackened, and correction is required. However, when the raw area data is smaller than the reference area data, the wedge under test is judged to be kept tight, and correction is not required.

The invention includes a method for measuring pressure on a member according to claim 1.

The invention includes a system for measuring pressure on a member according to claim 4.

The invention will now be described in greater detail, by way of example, with reference to the drawings, in which:-
Fig. 1 is a partial exploded view of a electric generator stator;
Fig. 2 is a block diagram of an example of a system of an embodiment of the invention;
Fig. 3 is a block diagram of an example of a system of an embodiment of the invention;
Fig. 4 is a block diagram of an example of a system of an embodiment of the invention;
Fig. 5 is a flow chart showing an example of a method of an embodiment of the invention;
Fig. 6 is a flow chart showing an example of a method of an embodiment of the invention;
Fig. 7 shows an algorithm used in embodiments of the invention;
Fig. 8 is a graph showing loose wedge test results;
Fig. 9 is a graph showing controlled tightness - 120 mil filler test results;
Fig. 10 is a graph showing controlled tightness - 150 mil filler test results; and
Fig. 11 is a graph showing controlled tightness - 165 mil filler test results.

The two methods for semi-quantitative assessment of the tightness of a generator's wedging system discussed above have been in use for several years. However, neither of these methods have the measurement resolution needed to accurately assess wedge pressure. Further, neither method accurately assesses wedge tightness over the full range of operational wedge pressure for a top ripple spring system.

With the introduction of top ripple spring wedging systems, measurement of wedge pressure has become a requirement for accurately assessing the need for wedge system maintenance. Therefore, neither existing method meets current diagnostic needs.

Being able to determine generator stator bar wedge pressure accurately is critical to conducting an effective generator predictive maintenance program. However, measuring wedge pressure accurately is currently a significant problem. This problem is solved by embodiments of the invention that provide a measurement methodology that determines wedge pressure with sufficient accuracy.

A generator wedge tightness evaluation system employing the vibratory transmission and its natural frequency shift relating to different stator bar wedge (wedge) pressures can be used to accurately measure wedge tightness. This system uses a variety of mechanical excitations to create a vibratory response in wedges. The vibratory response can be detected by numerous methods and is then subjected to on-line or post-processing spectral reduction by, for example, Fast Fourier Transform (FFT) or other means. The spectral analysis can be correlated to the wedge pressure using a proprietary set of algorithms and analysis techniques.

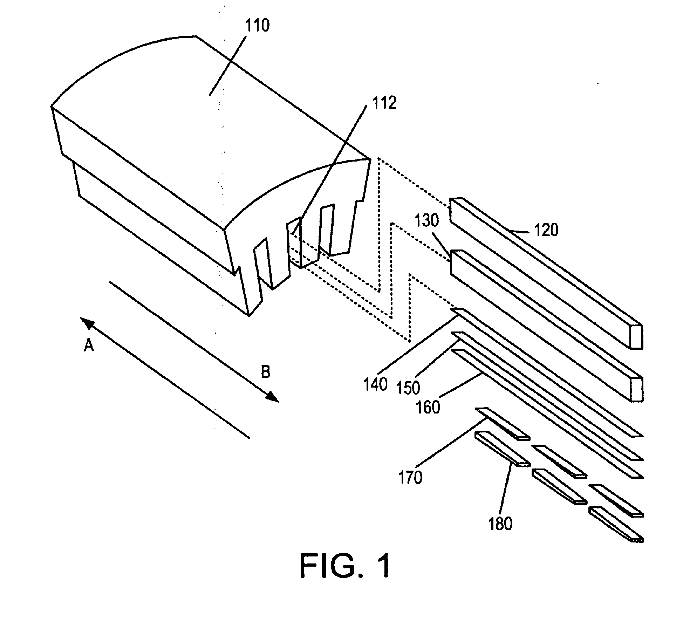

Fig. 1 shows an example of a portion of an electric generator stator 110 and the associated pieces that fit in one of the slots 112 of stator 110. An outer stator bar 120, an inner stator bar 130, one or more slot fillers 140, 150, and a top ripple spring 160 are held in place by stator wedge slides 170 and stator wedges 180. Moving stator wedge slides 170 in the direction of arrow A relative to stator wedges 180, or moving stator wedges 180 in the direction of arrow B relative to stator wedge slides 170, applies pressure to outer stator bar 120 and inner stator bar 130 in a direction that tends to keep outer stator bar 120 and inner stator bar 130 in slot 112.

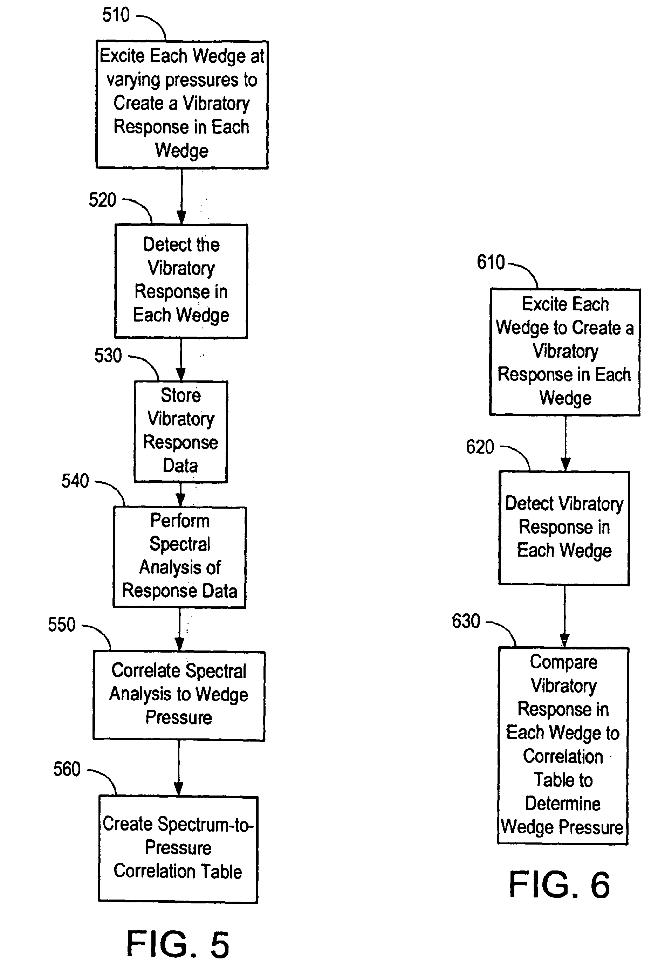

As the pressure on a top ripple spring wedge system is increased (or decreased), the frequency spectrum of individual wedges creates an overall frequency modulation relative to that wedge pressure increase (or decrease). That modulation is both predictable and measurable. Embodiments of the invention cover both the method for correlating a spectral shift to pressure for a given wedge system (Fig. 5) and a methodology for data collection and analysis for applying that correlation (Fig. 6).

Spectra are collected for each wedge system of interest at varying pressures to develop a spectrum-to-pressure correlation for that particular wedge system. In the example shown in Fig. 5, in step 510 each wedge is excited at varying pressures to create a vibratory response in each wedge. In step 520, these vibratory responses in each wedge are detected by a sensor. In step 530, the detected vibratory responses are stored in a data storage device. In step 540, a spectral analysis of the detected vibratory responses is performed by, for example, calculating a center energy band of the recorded spectra (f₁) from 0 to 20KHz. In step 550, each wedge system pressure is then correlated to a specific f₁. When applied to a full range of wedge pressures, step 560, this methodology results in a spectrum-to-pressure correlation table that can routinely and consistently be applied to the wedge system of interest.

Fig. 6 shows a method of measuring wedge pressure by collecting vibratory response data and comparing that response data to a correlation table. In step 610, each wedge is excited to create a vibratory response in that wedge. In step 620, the vibratory response created in step 610 is detected. In step 630, the vibratory response in each wedge is compared to a previously prepared spectrum-to-pressure correlation table to determine the pressure of each wedge.

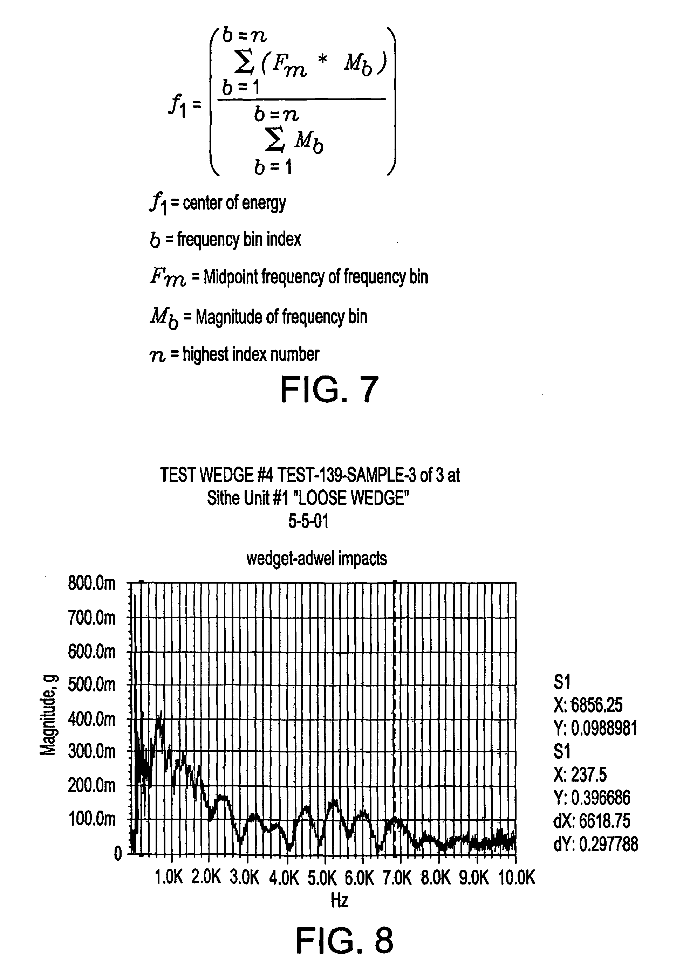

Fig. 7 shows an example of an algorithm that can be used to calculate the center of energy f₁. This example of an algorithm is a frequency weighted average of the spectral response. The algorithm in Fig. 7 can be applied to the vibratory response of the excited wedge to determine the center of energy band of the recorded spectra. The algorithm in this example is applied after the response has been converted from the time domain to the frequency domain by post-processing spectral reduction, for example, Fast Fourier Transform or other means. Upon post-processing, the spectral data will have a frequency bin assignment and a magnitude. The center of energy band (f₁) can be calculated by applying these domain characteristics to the algorithm shown in Fig. 7. The value of f₁ will be correlated to wedge pressure.

While Fig. 7 shows one example of an algorithm that can be used in embodiments of the invention. However, other algorithms can be used. For example, the center of energy could be calculated using integrals (the center of energy band would be the band that divides the entire spectral integral into, for example, two integrals of equal size).

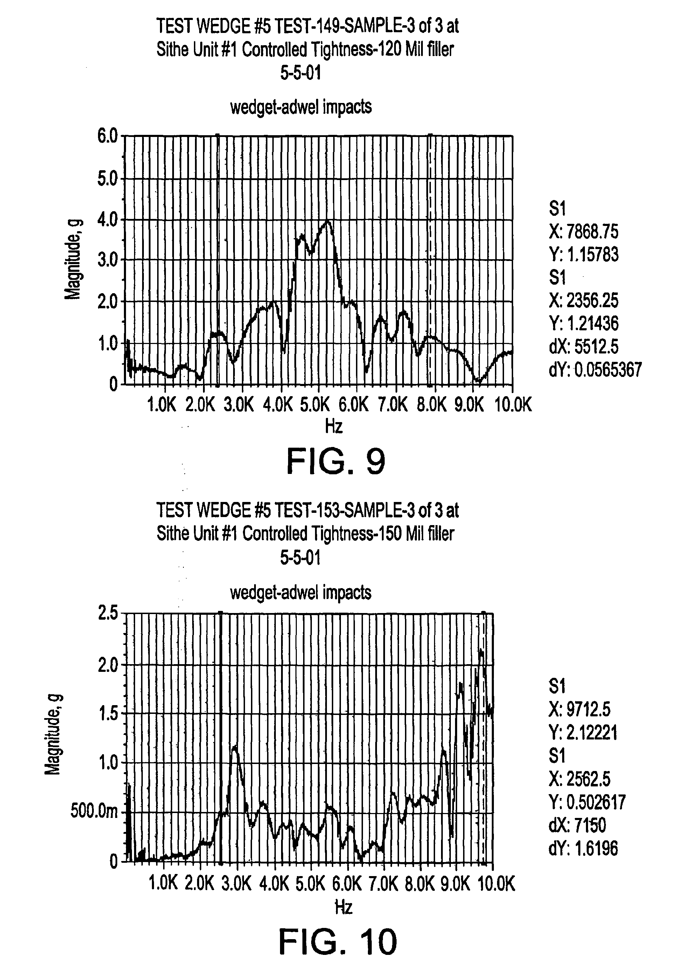

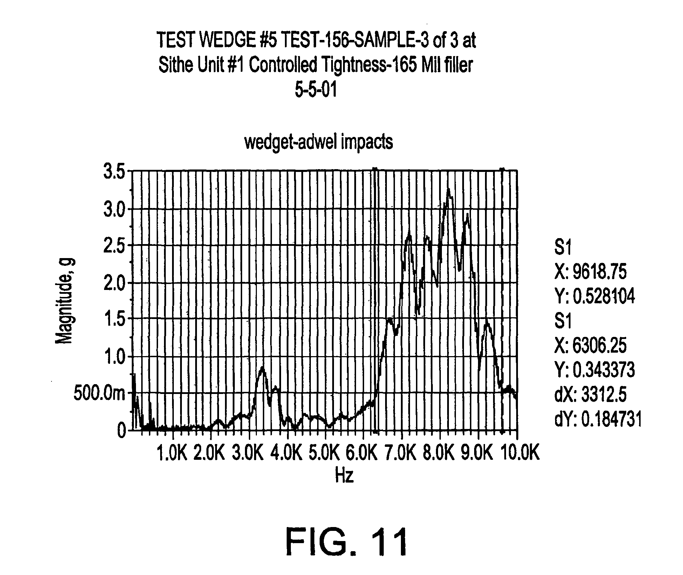

Figs. 8 - 11 show test data obtained for what is considered a loose wedge condition (Fig. 8), and three different levels of controlled tightness of the wedge using slot fillers having different thicknesses (Figs. 9 - 11). Figs. 9 and 10 represent mid-range tightness, while Fig. 11 represents a high level of wedge tightness. The spectral plots shown in Figs. 8 - 11 were recorded employing a PC based spectral analyzer and a high frequency accelerometer. The data shows that the collective energy band of acceleration increases as a function of wedge tightness.

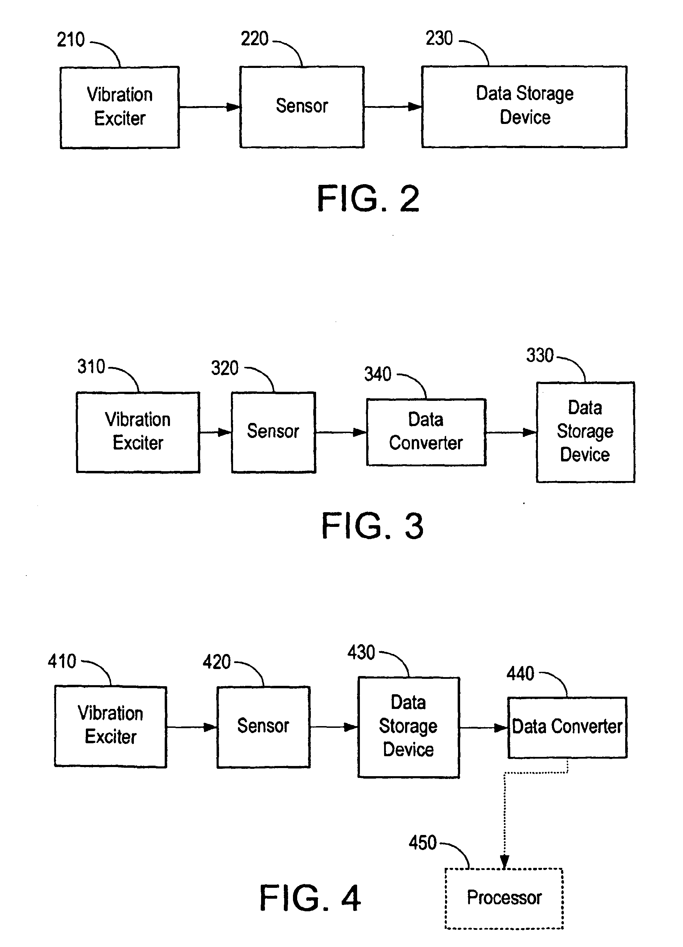

The data collection can be accomplished using a number of equipment configurations. Embodiments of the invention include equipment configurations containing a vibrational exciter, a sensor and a data storage device. Fig. 2 shows an example of such a configuration. Vibrational exciter 210 is capable of providing excitation for the frequency band of interest as determined in the correlation table development above. Excitation techniques include (but are not limited to) random impact, pink noise, multi-random impact and harmonic excitation. Sensor 220 is capable of recording a linear or near linear (less than 3dB drop) across the frequency band of interest for the specific wedge system being measured. Sensors might include (but are not limited to) microphones, laser vibrometers and accelerometers. Data storage device 230 can be either analogue or digital. (Analogue devices will preferably be associated with post-processing analogue to digital conversion.) Storage devices might include (but are not limited to) magnetic digital storage, optical digital storage, e-prom and tape recorders. Either before or after storage, the vibrational response data is preferably converted from the time-domain to the frequency domain. This conversion can be accomplished by a number of common methods including, for example, standard Fourier Analysis, FFT or Order Tracking Analysis. Figs. 3 and 4 show examples of systems similar to what is shown in Fig.2, except that Figs. 3 and 4 include a data converter. In Fig. 3, a data converter 340 is located between sensor 320 and data storage device 330. In Fig. 4, a data converter 440 is located downstream of data storage device 430.

An example of a system for analyzing data collected from a wedge system for which a spectrum-to-pressure correlation table already exists is the system shown in Fig. 4 including processor 450. Processor 450 performs the comparison of the vibrational response data to the spectrum-to-pressure correlation table to determine the pressure being exerted on the wedges.

The spectra are analyzed using the same technique described above except that once f₁ is identified for a given spectrum, the correlation table created in step 560 of Fig. 5, for example, is then used to determine the wedge pressure.

## Claims

1. A method for measuring pressure on a member (180) in an electromechanical device, the method comprising:
exciting the member (610) to create a vibratory response in the member;
detecting the vibratory response (620);
comparing the vibratory response to at least one of a plurality of previously recorded vibratory responses of the member (630); and
estimating the pressure on the member based on the comparison of the vibratory response to the at least one of the plurality of previously recorded vibratory responses (630); and
further comprising performing spectral analysis (540) on the vibratory response prior to comparing the vibratory response to the previously recorded vibratory responses; and
wherein the spectral analysis comprises the application of an algorithm to the vibratory response to determine the center of energy band of a spectrum of the vibratory response.

2. The method of claim 1, wherein each of the plurality of previously recorded vibratory responses corresponds to a particular pressure on the member.

3. The method of claim 2, wherein the pressure on the member is estimated by determining which of the plurality of previously recorded vibratory responses most nearly matches the current vibratory response.

4. A system for measuring pressure on a member (180) in an electromechanical device, the system comprising:
a vibration exciter (210) for exciting the member to create a vibratory response in the member;
a sensor (220) for detecting the vibratory response; and
a data storage device (230) containing previously recorded vibratory responses,
wherein the vibratory response is compared to at least one of the plurality of previously recorded vibratory responses, and
the pressure on the member is estimated based on the comparison of the vibratory response to the at least one of the plurality of previously recorded vibratory responses; and
further comprising a processor,
wherein the processor performs spectral analysis on the vibratory response prior to the vibratory response being compared to the previously recorded vibratory responses; and
wherein the spectral analysis comprises the application of an algorithm to the vibratory response to determine the center of energy band of a spectrum of the vibratory response.

5. The system of claim 4, wherein each of the previously recorded vibratory responses corresponds to a particular pressure on the member.

6. The system of claim 4 or 5, wherein the pressure on the member is estimated by determining which of the plurality of previously recorded vibratory responses most nearly matches the current vibratory response.

## Patentansprüche

1. Verfahren zum Messen von Druck auf ein Element (180) in einer elektromechanischen Vorrichtung, wobei das Verfahren die Schritte aufweist:
Erregen des Elements (610), um eine Schwingungsantwort in dem Element zu erzeugen;
Detektieren der Schwingungsantwort (620);
Vergleichen der Schwingungsantwort mit wenigstens einer von mehreren zuvor aufgezeichneten Schwingungsantworten des Elements (630); und
Schätzen des Drucks auf das Element auf der Basis des Vergleichs der Schwingungsantwort mit wenigstens einer von den mehreren zuvor aufgezeichneten Schwingungsantworten (630); und
ferner mit dem Schritt der Durchführung einer Spektralanalyse (540) an der Schwingungsantwort vor dem Vergleichen der Schwingungsantwort mit den zuvor aufgezeichneten Schwingungsantworten; und
wobei die Spektralanalyse die Anwendung eines Algorithmus auf die Schwingungsantwort umfasst, um den Mittelpunkt des Energiebands eines Spektrums der Schwingungsantwort zu bestimmen.

2. Verfahren nach Anspruch 1, wobei jede von den mehreren zuvor aufgezeichneten Schwingungsantworten einem bestimmten Druck auf das Element entspricht.

3. Verfahren nach Anspruch 2, wobei der Druck auf das Element geschätzt wird, indem ermittelt wird, welche von den mehreren zuvor aufgezeichneten Schwingungsantworten am besten mit der momentanen Schwingungsantwort übereinstimmt.

4. System zum Messen des Drucks auf ein Element (180) in einer elektromechanischen Vorrichtung, wobei das System aufweist:
eine Schwingungserregungsvorrichtung (210) zum Erregen des Elements, um eine Schwingungsantwort in dem Element zu erzeugen;
einen Sensor (220) zum Detektieren der Schwingungsantwort; und
eine Datenspeichervorrichtung (230), welche die zuvor aufgezeichneten Schwingungsantworten enthält,
wobei die Schwingungsantwort mit wenigstens einer von den mehreren zuvor aufgezeichneten Schwingungsantworten verglichen wird, und
der Druck auf das Element auf der Basis des Vergleichs der Schwingungsantwort mit der wenigstens einen von den mehreren zuvor aufgezeichneten Schwingungsantworten geschätzt wird; und
ferner mit einem Prozessor,
wobei der Prozessor eine Spektralanalyse an der Schwingungsantwort vor dem Vergleich der Schwingungsantwort mit den zuvor aufgezeichneten Schwingungsantworten durchführt; und
wobei die Spektralanalyse die Anwendung eines Algorithmus auf die Schwingungsantwort umfasst, um die Mitte eines Energiebands eines Spektrums der Schwingungsantwort zu ermitteln.

5. System nach Anspruch 4, wobei jede von den zuvor aufgezeichneten Schwingungsantworten einem bestimmten Druck auf das Element entspricht.

6. System nach Anspruch 4 oder 5, wobei der Druck auf das Element geschätzt wird, indem ermittelt wird, welche von den mehreren zuvor aufgezeichneten Schwingungsantworten am besten mit der momentanen Schwingungsantwort übereinstimmt.

## Revendications

1. Procédé pour mesurer la pression sur un élément (180) dans un dispositif électromécanique, le procédé comprenant:
exciter l'élément (610) afin de créer une réponse vibratoire dans l'élément ;
détecter la réponse vibratoire (620);
comparer la réponse vibratoire à au moins une parmi la pluralité des réponses vibratoires précédemment enregistrées de l'élément (630) ; et
estimer la pression sur l'élément en fonction de la comparaison de la réponse vibratoire à l'au moins une parmi la pluralité des réponses vibratoires (630) précédemment enregistrées ; et
comprenant en outre effectuer une analyse spectrale (540) sur la réponse vibratoire avant de comparer la réponse vibratoire aux réponses vibratoires précédemment enregistrées; et
dans lequel l'analyse spectrale comprend l'application d'un algorithme à la réponse vibratoire pour déterminer le centre de bande d'énergie d'un spectre de la réponse vibratoire.

2. Procédé selon la revendication 1, dans lequel chacune de la pluralité des réponses vibratoires précédemment enregistrées correspond à une pression particulière sur l'élément.

3. Procédé selon la revendication 2, dans lequel la pression sur l'élément est estimée en déterminant laquelle de la pluralité des réponses vibratoires précédemment enregistrées se rapproche le plus de la réponse vibratoire actuelle.

4. Système de mesure de la pression sur un élément (180) dans un dispositif électromécanique, le système comprenant :
un excitateur de vibrations (210) pour exciter l'élément afin de créer une réponse vibratoire dans l'élément ;
un capteur (220) pour détecter la réponse vibratoire ; et
un dispositif (230) de stockage des données contenant des réponses vibratoires précédemment enregistrées,
dans lequel la réponse vibratoire est comparée à au moins une de la pluralité des réponses vibratoires précédemment enregistrées, et
la pression sur l'élément est estimée en fonction de la comparaison de la réponse vibratoire à l'au moins une de la pluralité de réponses vibratoires précédemment enregistrées, et
comprenant en outre un processeur,
dans lequel le processeur effectue l'analyse spectrale sur la réponse vibratoire avant que la réponse vibratoire ne soit comparée aux réponses vibratoires précédemment enregistrées ; et
dans lequel l'analyse spectrale comprend l'application d'un algorithme à la réponse vibratoire pour déterminer le centre de la bande d'énergie d'un spectre de la réponse vibratoire.

5. Système selon la revendication 4, dans lequel chacune des réponses vibratoires précédemment enregistrées correspond à une pression donnée sur l'élément.

6. Système selon la revendication 4 ou la revendication 5, dans lequel la pression sur l'élément est estimée en déterminant laquelle de la pluralité des réponses vibratoires précédemment enregistrées se rapproche le plus de la réponse vibratoire actuelle.
